Europäisches Patentamt

European Patent Office

Office européen des brevets

(19)

(11) Numéro de publication : **0 036 820**
**B1**

(12) **FASCICULE DE BREVET EUROPÉEN**

(45) Date de publication du fascicule du brevet :
02.01.86

(51) Int. Cl.⁴ : **G 21 C  5/06**

(21) Numéro de dépôt : **81400454.5**

(22) Date de dépôt : **23.03.81**

(54) **Dispositif de limitation des effets de la poussée hydraulique axiale s'exerçant sur des assemblages combustibles de réacteurs nucléaires.**

(30) Priorité : **26.03.80 FR 8006694**

(43) Date de publication de la demande :
**30.09.81 Bulletin 81/39**

(45) Mention de la délivrance du brevet :
**02.01.86 Bulletin 86/01**

(84) Etats contractants désignés :
**BE DE GB IT SE**

(56) Documents cités :
**DE-A- 2 331 352**
**FR-A- 2 148 549**
**GB-A- 1 025 939**
**GB-A- 2 010 569**
**US-A- 4 127 445**
**US-A- 4 134 790**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

**Framatome**
**Tour Fiat 1 place de la Coupole**
**F-92400 Courbevoie (FR)**

(72) Inventeur : **Leclercq, Joseph**
**30, route de Champagne**
**F-69370 Saint Didier (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention se rapporte aux assemblages combustibles pour réacteurs nucléaires et plus particulièrement aux assemblages combustibles pour les réacteurs refroidis à l'eau légère.

On pourra se référer utilement, pour la description d'assemblages combustibles pour réacteurs à eau légère d'un type connu, aux deux brevets français FR-A-1 536 527 et FR-A-2 049 108 au nom de la Société Westinghouse Electric Corporation. Dans des éléments du genre de ceux décrits dans ces brevets, le combustible nucléaire du réacteur est réparti selon une pluralité de crayons combustibles logés dans le cœur du réacteur selon une répartition en assemblages jointifs de section générale carrée.

Chaque assemblage combustible comporte une armature mécanique rigide composée de deux pièces d'extrémité respectivement supérieure et inférieure, munies d'orifices permettant le passage de l'eau de réfrigération qui circule de bas en haut et un certain nombre de tubes guides assurant la solidité de l'ensemble par leur fixation auxdites pièces d'extrémité. Le long de chaque assemblage un certain nombre de grilles de maintien liées aux tubes guides et délimitant des cellules de section carrée, permet le passage et le maintien transversal des crayons de combustible eux-mêmes qui sont pour ainsi dire suspendus par frottement dans les grilles sans contact avec les pièces d'extrémité supérieure et inférieure.

Chaque assemblage combustible s'étend sur plusieurs mètres de long entre une plaque de cœur inférieure et une plaque de cœur supérieure appartenant aux équipements internes de la cuve du réacteur. Il repose sur la plaque de cœur inférieure et est en quelque sorte enfilé sur des pions de centrage faisant partie intégrante des deux plaques précédentes liées à la cuve du réacteur, lesdits pions de centrage pouvant pénétrer plus ou moins dans des logements cylindriques creux prévus généralement au nombre de deux ou quatre sur chacune des pièces d'extrémité supérieure et inférieure de chaque assemblage.

Le mouvement vertical ascendant de chaque assemblage entre les deux plaques de cœur précédentes, sous l'effet des variations de la poussée hydraulique due aux changements de régime en fonctionnement normal du débit de l'eau de réfrigération qui circule de bas en haut dans le cœur du réacteur, est empêché par la présence de ressorts au nombre généralement de quatre situés sur la pièce d'extrémité supérieure de l'assemblage combustible. La figure 1 du brevet français FR-A-1 536 257 montre un tel ressort sous la référence 38. Ces ressorts viennent cependant se comprimer contre la plaque supérieure des équipements internes de la cuve du réacteur lors d'un « envol » de l'assemblage consécutif à un régime transitoire incidentel ou accidentel du débit de réfrigérant. Plus précisément, les poussées hydrauliques ont des amplitudes différentes suivant le régime du réacteur. Dans les conditions normales de fonctionnement, les fluctuations du débit hydraulique se traduisent par des variations d'effort sur les assemblages, inférieures à environ 10 % de leur poids. En revanche, en condition incidentelle ou accidentelle, des régimes transitoires appliquent des impulsions rapides et importantes sur l'assemblage. Ces impulsions peuvent, à titre d'exemple, atteindre ou dépasser le poids d'un assemblage qui risque ainsi de venir en contact avec un choc mécanique nuisible sur la plaque supérieure de cœur.

Bien que les dispositifs du genre de celui qui vient d'être rappelé puissent fonctionner de façon relativement satisfaisante, il n'en est pas moins vrai que des ressorts métalliques ne constituent pas une solution idéale pour l'amortissement des déplacements verticaux de tels assemblages combustibles. En outre, les propriétés mécaniques de ces ressorts viennent fatalement à se détériorer en fonction du temps, si l'on tient compte qu'ils fonctionnent à température élevée, de l'ordre de 300 °C, et sous un rayonnement intense.

De plus, la réalisation de ces ressorts métalliques nécessite leur surdimensionnement pour leur permettre d'absorber les grandes variations dimensionnelles relatives des assemblages vis-à-vis des équipements internes de la cuve sous l'effet des variations de température et de l'irradiation. Ces ressorts développent, du fait de leur surdimensionnement, des efforts importants gênants sur les équipements internes sous certaines conditions opératoires.

Un autre type de dispositif anti-envol d'assemblage combustible de réacteur nucléaire décrit dans le brevet britannique GB-A-2 010 569 combine les effets d'un ressort élastique et d'un amortissement hydraulique. Toutefois, l'amortissement mécanique ainsi obtenu utilise un ressort 47 qui crée une certaine instabilité due au fait qu'à chaque fois qu'il se trouve comprimé lors de l'envol de l'assemblage 10, ce ressort a, de par son élasticité, une tendance toute naturelle à restituer l'énergie qu'il a absorbée lors d'un choc transitoire rapide, notamment sous la forme d'une force antagoniste d'une intensité supérieure aux forces normalement développées lors du fonctionnement de l'assemblage.

La présente invention a précisément pour objet un dispositif de limitation des effets de la poussée hydraulique axiale s'exerçant sur des assemblages combustibles de réacteurs nucléaires à eau légère qui permet, en supprimant les ressorts métalliques, d'obtenir par des moyens simples, efficaces et faciles à mettre en œuvre, une absence de mouvements axiaux de l'assemblage lors des fluctuations normales de la poussée hydraulique et/ou un amortissement hydraulique des déplacements rapides de l'assemblage en régime transitoire, en évitant ainsi les chocs mécaniques importants sur la plaque de cœur.

Ce dispositif de limitation de l'effet de la poussée hydraulique axiale s'exerçant sur des assemblages combustibles de réacteurs nucléaires refroidis à l'eau, du type de ceux qui sont maintenus, avec un certain débattement axial, à l'aide de pions de centrage liés aux plaques de cœur supérieure et inférieure des équipements internes et coulissant dans des logements cylindriques creux correspondants, portés par lesdits assemblages et du type dans lesquels l'amortissement des mouvements axiaux des assemblages est réalisé par la coopération de moyens hydrauliques, lesdits moyens hydrauliques consistant en une évacuation contrôlée d'eau au travers d'un orifice, se caractérise en ce que lesdits logements sont munis intérieurement d'une manchette élastique cylindrique fendue située contre la paroi interne du logement correspondant, de façon à enserrer le pion de centrage et à exercer sur lui une force de frottement suffisante pour empêcher les mouvements axiaux de l'assemblage lors des fluctuations normales de la poussée hydraulique.

Avantageusement, l'orifice permettant l'évacuation de l'eau est un orifice calibré 19.

Selon une première variante de l'invention, l'orifice permettant l'évacuation contrôlée de l'eau est une fente calibrée de la manchette élastique et c'est un orifice large, percé dans le logement qui facilite l'évacuation libre de l'eau que ce logement contient. Dans ce cas, les moyens capables de s'opposer au déplacement axial sont constitués par une manchette élastique cylindrique fendue et située contre la paroi interne du logement correspondant, de façon à enserrer le pion de centrage et à exercer sur lui une force de frottement suffisante pour empêcher les mouvements axiaux de l'assemblage lors des fluctuations normales de la poussée hydraulique.

Le logement de la manchette élastique est percé, au voisinage de la pièce d'extrémité de l'assemblage combustible, d'un orifice calibré contrôlant l'évacuation de l'eau produisant ainsi un effet d'amortissement lors d'une pénétration du pion de centrage dans le logement de la plaque supérieure et d'une extraction simultanée du pion de centrage du logement de la plaque inférieure consécutives à l'envol des assemblages combustibles au cours de régimes transitoires rapides.

Selon une deuxième variante de réalisation, la fonction amortissement est directement assurée par la manchette élastique dans laquelle l'évacuation ou l'entrée de l'eau est contrôlée par la fente calibrée de ladite manchette ; les dimensions relatives de la manchette et du pion permettent d'assurer l'étanchéité du pot d'amortissement défini par la manchette. Dans cette variante, l'orifice d'évacuation ou d'entrée de l'eau est largement dimensionné.

Selon une troisième variante de réalisation de l'invention, les moyens capables de s'opposer au déplacement sont constitués également de façon mixte, c'est-à-dire qu'ils comportent à la fois un freinage axial mécanique par frottement et un ralentissement par amortissement hydraulique. Les moyens de freinage du déplacement axial sont constitués par une manchette élastique cylindrique fendue ; dans cette deuxième variante, la manchette est bloquée dans le logement par interposition d'un joint élastique à l'extrémité du logement correspondant contre la paroi interne dudit logement, de façon à réaliser l'étanchéité avec le pion de centrage ; de la même façon, la manchette exerce sur le pion une force de frottement. En conjugaison, un effet d'amortissement hydraulique est obtenu grâce à la présence dans la paroi du logement située près de la pièce d'extrémité de l'assemblage, d'un orifice calibré de fuite d'eau, le joint d'étanchéité délimitant le pot d'amortissement.

Dans cette dernière variante de réalisation, on peut également prévoir une bague presse-étoupe à l'extrémité du logement entre le joint élastique et la manchette fendue, cette bague offrant, ainsi à l'extrémité de la chambre annulaire délimitée par le logement et ladite manchette, une surface en forme de couronne circulaire perpendiculaire à l'axe de l'embout.

Pour toutes les variantes précédentes, la fente de la manchette élastique cylindrique peut avoir une forme quelconque ; elle peut notamment s'étendre selon une génératrice de la surface cylindrique, être de forme hélicoïdale, ou avoir un tracé en ligne brisée sur ladite surface.

De toute façon, l'invention sera mieux comprise à la lecture qui suit de la description donnée à titre explicatif et non limitatif, de trois exemples de réalisation, faite en se référant aux figures 1 à 3 suivantes sur lesquelles :

la figure 1 montre les éléments connus de mise en place d'un assemblage combustible dans le cœur d'un réacteur à eau légère,

la figure 2 montre schématiquement, en coupe suivant l'axe d'un logement, un dispositif de freinage mécanique et d'amortissement hydraulique d'un pion de centrage à l'aide d'une manchette fendue,

la figure 3 représente en coupe selon l'axe d'un logement, un dispositif de freinage et d'amortissement du pion de centrage utilisant à la fois une manchette fendue, et un orifice calibré.

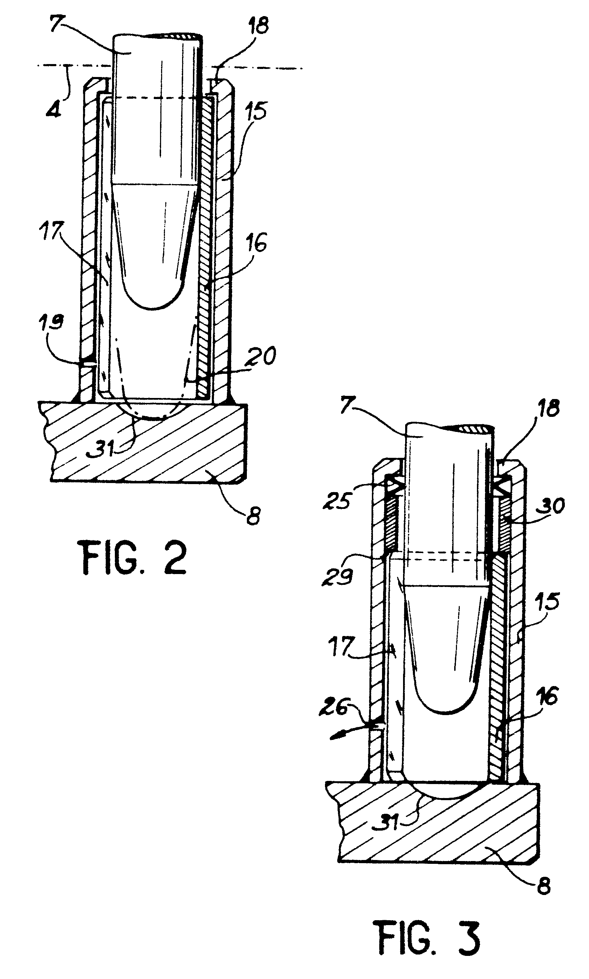

Les deux figures 2 et 3 précédentes décrivent des logements liés à la pièce supérieure d'un assemblage combustible non représenté, mais il est bien entendu que les pièces d'extrémité inférieures des assemblages correspondants comportent des dispositifs analogues et de sens inverse, c'est-à-dire dirigés vers le bas, qui sont de même nature et fonctionnent de façon symétrique. En particulier, les descriptions qui suivent ainsi que les revendications concernent essentiellement pour raison de simplicité le cas où lesdits dispositifs amortisseurs fonctionnent par pénétration du pion de centrage et évacuation d'eau, mais il doit être bien entendu que ceci n'est pas limitatif et que le fonctionnement symétrique par extraction des pions de centrage et entrée contrôlée d'eau dans les logements associés, fait également partie de la présente invention.

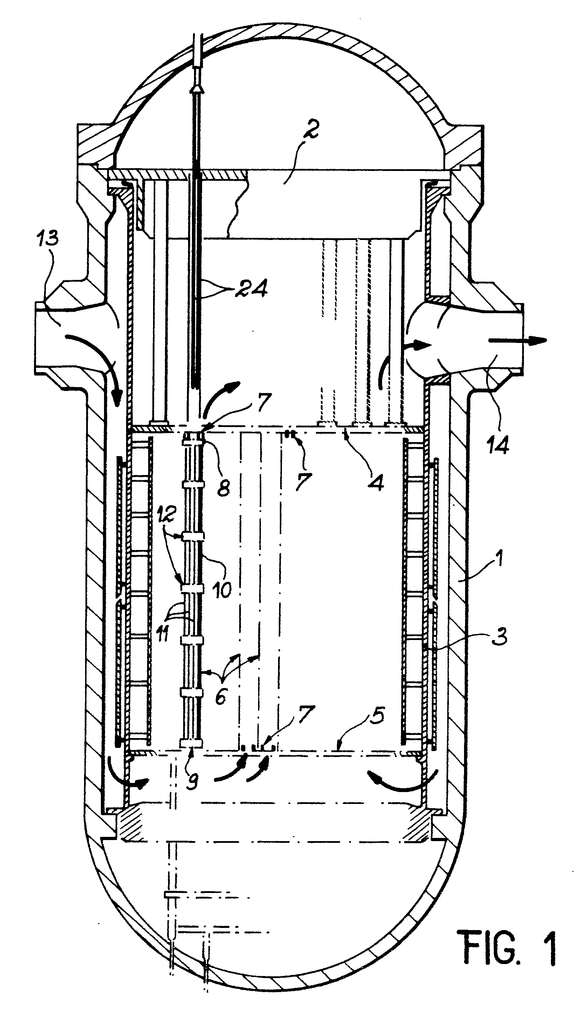

Sur la figure 1, on a représenté la disposition générale connue des assemblages combustibles d'un réacteur nucléaire de type à eau légère dont la cuve est référencée 1. Dans cette cuve 1 se trouvent suspendus les équipements internes. Ces équipements internes se composent d'équipements internes supérieurs et d'équipements internes inférieurs. Les équipements internes supérieurs sont constitués par une plaque supérieure 2 et une plaque inférieure 4 reliées entre elles par des entretoises. Les équipements internes inférieurs sont constitués d'une virole 3 et d'une plaque inférieure 5 réunies par soudure. C'est entre ces deux plaques 4 et 5 que sont disposés les assemblages combustibles tels que 6 qui reposent sur la plaque 5 et sont maintenus entre les plaques 4 et 5 avec un jeu axial à l'aide d'un certain nombre de pions de centrage tels que 7. La structure d'un assemblage combustible 6 comporte une pièce d'extrémité supérieure 8 et une pièce d'extrémité inférieure 9, et elle est rigidifiée et entretoisée par des tubes guides tels que 10. Les crayons combustibles 11 sont maintenus en place par des grilles de maintien 12 définissant des cellules de section carrée pour le passage des crayons 11, les grilles 12 étant elles-mêmes liées aux tubes guides 10. Les tubes guides 10 sont creux et servent également de logements pour le passage des crayons absorbants 24 utilisés pour le contrôle de la réaction en chaîne et l'arrêt rapide du réacteur en cas de besoin.

L'ensemble décrit sur la figure 1 baigne dans de l'eau chaude pressurisée à une température voisine de 300 ºC qui circule dans le cœur entre une entrée 13 et une sortie 14, baignant ainsi les différents assemblages 6 d'un courant réfrigérant ascendant capable de provoquer leur « envol » entre les deux plaques 4 et 5, notamment lors d'un changement brutal de régime ou « transitoire » du débit de réfrigérant.

Sur la figure 2, montrant un exemple de réalisation de l'invention, on a représenté le pion de centrage 7, lié à la plaque des équipements internes supérieurs non représentée d'un réacteur nucléaire refroidi à l'eau légère, et en 8, la pièce d'extrémité supérieure d'un assemblage combustible d'un tel réacteur.

La pièce d'extrémité 8 comporte, dans les réalisations actuellement existantes, deux logements tels que 15 dont un seul est représenté sur la figure 2. Ces logements 15 sont destinés à recevoir les pions de centrage 7 correspondants qui se déplacent à l'intérieur de ceux-ci par coulissement axial ; ils permettent ainsi le maintien en place de l'assemblage combustible, non représenté, tout en permettant à celui-ci un certain mouvement axial pour réagir contre les variations de poussées hydrauliques provenant des variations de régime de la circulation ascendante de l'eau de réfrigération. Cette pénétration plus ou moins importante du pion de centrage 7 dans le logement 15 doit se faire avec un freinage important, de l'ordre par exemple du 1/10e de la force d'envol hydraulique, pour éviter les mouvements axiaux des assemblages combustibles en régime normal.

Conformément à l'invention, ceci est réalisé dans l'exemple de la figure 2, à l'aide d'une manchette cylindrique 16 en un matériau élastique, tel que l'acier à ressort ou l'inconel par exemple, et comportant une fente latérale 17 sur toute sa hauteur selon une génératrice du cylindre. Cette manchette 16 est emprisonnée contre la paroi interne du logement 15 grâce à des épanouissements supérieurs 18 de ce logement 15. Par ailleurs, son diamètre intérieur est, au repos, inférieur au diamètre externe du pion de centrage 7 qu'elle vient enserrer avec frottement lors d'une pénétration axiale de ce pion 7. Une ouverture calibrée 19 est prévue dans la partie inférieure du logement 15 et en face de la fente 17 de la manchette 16, pour permettre l'évacuation contrôlée de l'eau en cas de surpression dans le pot amortisseur constitué par le logement 15.

En cas d'envol de l'assemblage, les pots d'amortissement de la pièce d'extrémité supérieure sont soumis à une surpression d'eau et ceux de la pièce d'extrémité inférieure à une dépression d'eau, ces effets étant bien entendu inversés lors de la descente de l'assemblage.

Une autre solution consiste à calculer la dimension de la fente 17 de la manchette élastique 16 pour que celle-ci constitue la fuite d'échappement calibrée du pot amortisseur formé alors par le volume contenu dans la partie intérieure de la manchette 16. L'étanchéité du pot amortisseur précédent est assurée par le contact de la manchette 16 et du pion 7. Le trou 19 du logement est alors largement dimensionné pour permettre l'évacuation libre de l'eau.

On calcule les diamètres en présence du pion de centrage 7 et de la manchette 16 pour que, en fonction de l'élasticité de cette dernière, la force radiale de frottement développée par la manchette 16 sur le pion de centrage 7 suffise à empêcher les oscillations axiales de l'assemblage combustible sous l'effet des instabilités du régime d'écoulement de l'eau de réfrigération. A titre d'exemple, il suffit que la force de frottement axial due au serrage de la manchette 16 sur le pion de centrage 7 soit de l'ordre de 1/10 de la poussée hydraulique pour que les mouvements de l'assemblage combustible soient évités. Une empreinte 31 est prévue sur la surface supérieure de la pièce d'extrémité 8 de l'assemblage pour servir un logement à la pointe du pion de centrage 7, arrondie à cet effet et représentée sur la figure en traits pointillés 20 dans cette position de pénétration extrême.

Sur la figure 3, on a représenté la troisième variante de réalisation de l'invention dans laquelle on a conjugué également les effets de freinage mécanique et d'amortissement hydraulique.

A cet effet, un joint élastique 25 du type circlips, est prévu entre le logement 15 et le pion de centrage 7 et vient s'appuyer sur la paroi latérale du pion de centrage 7 en fermant par conséquent de façon étanche cette extrémité du logement. La manchette 16 est fendue latéralement selon la fente 17 sur toute sa hauteur. En face de la fente 17 est prévu dans la paroi 15 du logement un orifice 26 de fuite contrôlée de l'eau. Dans ce mode de réalisation, le diamètre interne de la manchette 16 est inférieur au diamètre externe du pion de centrage 7 et la manchette 16, constituée dans un acier à ressort ou inconel, est capable d'enserrer, en exerçant sur lui une force de frottement, le pion de centrage 7.

Par ailleurs, la seule évacuation possible pour l'eau contenue dans le logement 15 étant l'orifice calibré 26, on obtient ainsi l'effet d'amortissement hydraulique supplémentaire recherché.

A titre de disposition complémentaire, on a prévu au sommet du logement 15 une bague presse-étoupe 30. Cette bague 30 offre à l'extrémité de la chambre annulaire comprise entre le logement 15 et la manchette 16 une surface 29 en forme de couronne circulaire perpendiculaire à l'axe du logement. L'effort exercé sur cette surface annulaire 29 par l'eau sous pression aide à soulever légèrement la manchette 16 si besoin était et par conséquent à faciliter l'évacuation de l'eau qu'elle contient vers l'orifice calibré 26.

Pour toutes les variantes précédentes, la fente 17 de la manchette élastique cylindrique peut avoir une forme quelconque ; elle peut notamment s'étendre selon une génératrice de la surface cylindrique, être de forme hélicoïdale, ou avoir un tracé en ligne brisée sur ladite surface.

**Revendications**

1. Dispositif de limitation de l'effet de la poussée hydraulique axiale s'exerçant sur des assemblages combustibles de réacteurs nucléaires refroidis à l'eau, du type de ceux qui sont maintenus, avec un certain débattement axial, à l'aide de pions de centrage (7) liés aux plaques de cœur supérieur (4) et inférieur (5) des équipements internes et coulissant dans des logements cylindriques creux correspondants (15), portés par lesdits assemblages et du type dans lesquels l'amortissement des mouvements axiaux des assemblages est réalisé par la coopération de moyens mécaniques et de moyens hydrauliques, lesdits moyens hydrauliques consistant en une évacuation contrôlée d'eau au travers d'un orifice (19, 26), caractérisé en ce que lesdits logements (15) sont munis intérieurement d'une manchette élastique cylindrique fendue (16) située contre la paroi interne du logement (15) correspondant, de façon à enserrer le pion de centrage (7) et à exercer sur lui une force de frottement suffisante pour empêcher les mouvements axiaux de l'assemblage lors des fluctuations normales de la poussée hydraulique.

2. Dispositif selon la revendication 1, caractérisé en ce que ledit orifice (19, 26) permettant l'évacuation contrôlée de l'eau est percé dans la paroi constituant le logement (15) et au voisinage de la pièce d'extrémité (8) de l'assemblage combustible pour permettre à l'eau contenue dans le logement (15) de s'écouler et pour produire ainsi de plus un amortissement hydraulique lors d'une pénétration du pion de centrage (7) consécutive à un régime transitoire rapide.

3. Dispositif selon la revendication 1, caractérisé en ce que l'orifice permettant l'évacuation contrôlée de l'eau est une fente calibrée (17) de la manchette élastique, un orifice (19) large, percé dans le logement (15) facilitant l'évacuation libre de l'eau que ce logement contient.

4. Dispositif selon l'une quelconque des revendications 1 à 3, caractérisé en ce que la manchette élastique cylindrique fendue (16) est disposée avec interposition d'un joint élastique (25) à l'extrémité du logement (15) correspondant contre la paroi interne dudit logement.

5. Dispositif selon la revendication 4, caractérisé en ce qu'une bague presse-étoupe (30) est prévue entre le joint élastique (25) et la manchette fendue (16), ladite bague (30) offrant à l'extrémité de la chambre annulaire délimitée par le logement et ladite manchette, une surface (29) en forme de couronne circulaire, perpendiculaire à l'axe du logement.

6. Dispositif selon l'une quelconque des revendications 3 à 5, caractérisé en ce que la forme de la fente de la manchette est choisie dans le groupe comprenant une génératrice du cylindre de ladite manchette, une hélice tracée à la surface dudit cylindre et une ligne brisée tracée à la surface précédente.

**Claims**

1. Apparatus for limiting the effect of axial hydraulic pressure exerted on fuel elements of water-cooled nuclear reactors, of the type which are held, with limited axial clearance, by means of guide pins (7) connected to the upper (4) and lower (5) core plates of internal equipment, and sliding in corresponding hollow cylindrical housings (15) carried by said elements and being of the type in which absorption of axial movements of the elements is produced by the cooperation of mechanical means and hydraulic means, said hydraulic means consisting of controlled passage of water through an orifice (19, 26), characterized in said housings (15) are provided internally with a cylindrical elastic slit sleeve (16) located between the inner wall of the corresponding housing (15), to surround the guide pin (7) and to exercise thereon a frictional force sufficient to prevent axial movement of the elements during normal fluctuations of hydraulic pressure.

2. Apparatus according to claim 1, characterized in that said orifice (19, 26) enabling controlled passage of water is pierced in the wall constituting the housing (15) and near the end piece (8) of the fuel assembly to enable water contained in the housing (15) to flow out and thereby additionally to produce hydraulic buffering during movement of the guide pin (7) following a transitory rapid condition.

3. Apparatus according to claim 1, characterized in that the orifice enabling controlled passage of water is a calibrated slit in the elastic sleeve, a large orifice (19) pierced in the housing (15) facilitating free passage of water contained in the housing.

4. Device according to any one of claims 1 to 3, characterized in that the cylindrical elastic slit sleeve (16) is located, with the interposition of an elastic gasket (25) at the end of the corresponding housing (15) against the inner wall of said housing.

5. Apparatus according to claim 4, characterized in that a stuffing-box ring (30) is provided between the elastic gasket (15) and the slit sleeve (16), said ring (30) providing a surface (29) in the form of a circular dome, perpendicular to the axis of the housing, at the end of the annular chamber delimited by the housing and said sleeve.

6. Apparatus according to any one of claims 3 to 5, characterized in that the shape of the slit of the sleeve is selected from the group comprising a generatrix of the cylinder forming said sleeve, a helix traced on the surface of said cylinder, and a broken line traced on the said surface.

**Patentansprüche**

1. Vorrichtung zur Begrenzung des auf die Brennstabbündel eines wassergekühlten Kernreaktors einwirkenden, axialen, hydraulischen Druckeffektes, wobei die Brennstoffbündel von der Art sind, die mit einem gewissen axialen Durchfederungsweg mittels Zentrierungszapfen (7), die mit der oberen (4) und der unteren (5) Platte der inneren Ausrüstung verbunden und in entsprechenden zylindrischen, hohlen Aufnahmen (15) verschiebbar sind, die von den Brennstabbündeln gehalten sind, und von der Art, bei denen die Dämpfung axialer Bewegungen der Brennstabbündel durch das Zusammenwirken mechanischer Mittel und hydraulischer Mittel erfolgt, wobei die hydraulischen Mittel aus der gesteuerten Entleerung von Wasser durch eine Öffnung (19, 26) hindurch bestehen, dadurch gekennzeichnet, daß die Aufnahmen (15) innen mit einer elastischen, zylindrischen, gespaltenen Manschette (16) versehen sind, die sich an der Innenwandung der entsprechenden Aufnahme (15) befindet der Art, daß der Zentrierungszapfen (7) eingeklemmt und auf diesen eine ausreichende Reibungskraft ausgeübt wird, um die axialen Bewegungen des Brennstabbündels bei normalen Schwankungen des hydraulischen Druckes zu verhindern.

2. Vorrichtung nach Anspruch 1, dadurch gekennzeichnet, daß die Öffnung (19, 26), welche die gesteuerte Entleerung von Wasser ermöglicht, in die die Aufnahme (15) bildende Wand und nahe des Endteils (8) des Brennstabbündels gebohrt ist, um dem in der Aufnahme (15) enthaltenen Wasser zu ermöglichen, auszuströmen und somit zusätzlich eine hydraulische Dämpfung beim Eindringen des Zentrierungszapfens (7) anschließend an einen schnellen, vorübergehenden Zustand zu erzeugen.

3. Vorrichtung nach Anspruch 1, dadurch gekennzeichnet, daß die die gesteuerte Entleerung von Wasser ermöglichende Öffnung ein kalibrierter Spalt (17) der elastischen Manschette, wobei eine große, in die Aufnahme (15) gebohrte Öffnung (19) das freie Entleeren von Wasser, welches die Aufnahme enthält, erleichtert.

4. Vorrichtung nach einem der Ansprüche 1 bis 3, dadurch gekennzeichnet, daß die elastische, zylindrische, gespaltene Manschette (16) mit einer Zwischenanordnung einer elastischen Dichtung (25) an dem entsprechenden Ende der Aufnahme (15) und gegen die Innenwandung der Aufnahme angeordnet ist.

5. Vorrichtung nach Anspruch 4, dadurch gekennzeichnet, daß ein Druck-Packungsring (30) zwischen der elastischen Dichtung (25) und der gespaltenen Manschette (16) vorgesehen ist, wobei der Ring (30) eine Oberfläche (29) in der Form eines kreisförmigen Kranzes, senkrecht zu der Achse der Aufnahme besitzt, die zu dem Ende der ringförmigen, von der Aufnahme und der Manschette begrenzten Kammer weist.

6. Vorrichtung nach einem der Ansprüche 3 bis 5, dadurch gekennzeichnet, daß die Form des Spaltes der Manschette aus der Gruppe ausgewählt ist, die eine erzeugende des Zylinders der Manschette, eine auf der Oberfläche dieses Zylinders verlaufende Schraubenlinie und eine auf der vorhergehenden Oberfläche verlaufende, punktierte Linie umfaßt.

FIG. 1

FIG. 2

FIG. 3